# EUROPEAN PATENT APPLICATION

(11) **EP 4 521 238 A1**
(43) Date of publication of application: **12.03.2025**
(21) Application number: 23905771.4
(22) Date of filing: 13.12.2023
(51) Int. Cl.: G06F 9/451, G06F 3/0481, G06F 3/04842, G06F 3/0482

(54) **INTERACTION METHOD AND APPARATUS, ELECTRONIC DEVICE, AND STORAGE MEDIUM**

(30) Priority: 23.12.2022 CN 202211669450
(71) Applicant: Beijing Zitiao Network Technology Co., Ltd., Beijing 100190 (CN)
(72) Inventor: ZHANG, Yimeng, Beijing 100028 (CN); HU, Zhiyang, Beijing 100028 (CN); LI, Yuhan, Beijing 100028 (CN); TANG, Bo, Beijing 100028 (CN)
(74) Representative: Williams, Michael David
(86) International application number: PCT/CN2023/138350
(87) International publication number: WO 2024/131605

(57) **Abstract**

Embodiments of the present disclosure provide an interaction method and apparatus, an electronic device, and a storage medium. The method comprises: displaying an object panel of a target work on a first page, wherein a first identifier of a target publisher and at least one object control are displayed in the object panel; in response to a first trigger operation for the object control, displaying a first visual element; after completion of showing the first visual element, displaying a second visual element at a first preset position of the first page, and controlling the second visual element to move on the first page; and in response to the second visual element moving to a first display position of the first identifier, cancelling the display of the second visual element. The embodiments of the present disclosure can enrich display modes of a page when a user triggers an object control.

## Description

The present application claims priority of the Chinese Patent Application No. 202211669450.0 filed on December 23, 2022, and the disclosure of which is incorporated herein by reference in its entirety as part of the present application.

### TECHNICAL FIELD

Embodiments of the present disclosure relate to an interaction method and apparatus, an electronic device, and a storage medium.

### BACKGROUND

At present, when a user watches a work, the user can give a virtual item to a publisher of the work. However, in some cases, when a virtual item is given, there is only a single page display manner.

### SUMMARY

Embodiments of the present disclosure provide an interaction method and apparatus, an electronic device, and a storage medium to enrich the page display manner when a user gifts a virtual item to a publisher of a work.

In a first aspect, the embodiments of the present disclosure provide an interaction method, and the method includes:
displaying an object panel of a target work in a first page, in which a first identifier of a target publisher and at least one object control are displayed in the object panel, and the target publisher is a publisher of the target work;
showing a first visual element in response to a first triggering operation for the object control, in which the first visual element is associated with a target preset object, the target preset object corresponds to a target object control, and the target object control is an object control on which the first triggering operation acts;
displaying a second visual element at a first preset position of the first page, and controlling the second visual element to move in the first page after the completion of showing the first visual element; and
cancelling a display of the second visual element in response to the second visual element moving to a first display position of the first identifier.

In a second aspect, the embodiments of the present disclosure provide an interaction apparatus, and the apparatus includes:
an object panel display module, which is configured to display an object panel of a target work in a first page, wherein a first identifier of a target publisher and at least one object control are displayed in the object panel, and the target publisher is a publisher of the target work;
an element showing module, which is configured to show a first visual element in response to a first triggering operation for the object control, in which the first visual element is associated with a target preset object, the target preset object corresponds to a target object control, and the target object control is an object control on which the first triggering operation acts;
a moving control module, which is configured to, after the completion of showing the first visual element, display a second visual element at a first preset position of the first page, and control the second visual element to move in the first page; and
a cancelling display module, which is configured to cancel a display of the second visual element in response to the second visual element moving to a first display position of the first identifier.

In a third aspect, the embodiments of the present disclosure provide an electronic device, and the device includes:
one or more processors; and
a memory is configured to store one or more programs;
when the one or more programs are executed by the one or more processors, the one or more processors implement the interaction method as described in any of the embodiments of the present disclosure.

In a fourth aspect, the embodiments of the present disclosure further provide a storage medium having computer-executable instructions stored thereon, and the computer-executable instructions when executed by a computer processor being used to implement the interaction method as described in any of the embodiments of the present disclosure.

### BRIEF DESCRIPTION OF DRAWINGS

The foregoing and other features, advantages, and aspects of the embodiments of the present disclosure will become more apparent in conjunction with the drawings and with reference to the following specific embodiments. Throughout the drawings, the same or similar drawing markings indicate the same or similar elements. It should be understood that the drawings are schematic and that the originals and elements are not necessarily drawn to scale.
FIG. 1 is a flowchart of an interaction method provided by an embodiment of the present disclosure;
FIG. 2 is a schematic diagram of displaying an object panel provided by an embodiment of the present disclosure;
FIG. 3 is a schematic diagram of displaying another object panel provided by an embodiment of the present disclosure;
FIG. 4 is a schematic diagram of displaying yet another object panel provided by an embodiment of the present disclosure;
FIG. 5 is a schematic diagram of displaying a quantity panel provided by an embodiment of the present disclosure;
FIG. 6 is a schematic diagram of displaying a quantity input region provided by an embodiment of the present disclosure;
FIG. 7 is a flowchart of another interaction method provided by an embodiment of the present disclosure;
FIG. 8 is a schematic diagram of displaying a preset feedback visual element provided by an embodiment of the present disclosure;
FIG. 9 is a schematic diagram of displaying a first user list provided by an embodiment of the present disclosure;
FIG. 10 is a structural block diagram of an interaction apparatus provided by an embodiment of the present disclosure; and
FIG. 11 is a structural schematic diagram of an electronic device provided by an embodiment of the present disclosure.

### DETAILED DESCRIPTION

The embodiments of the present disclosure will be described in greater detail below with reference to the drawings. Although certain embodiments of the present disclosure are shown in the drawings, it should be understood, however, that the present disclosure may be realized in various forms and should not be construed as being limited to the embodiments set forth herein, but rather are provided for a more thorough and complete understanding of the present disclosure. It should be understood that the drawings and embodiments of the present disclosure are for exemplary purposes only and are not intended to limit the scope of protection of the present disclosure.

It should be understood that the individual steps documented in the method embodiments of the present disclosure may be performed in a different order, and/or in parallel. Furthermore, the method embodiments may include additional steps and/or omit performing the illustrated steps. The scope of the present disclosure is not limited in this regard.

The term "including" and variations thereof, as used herein, is open-ended, i.e., "including but not limited to." The term "based on" is "based at least in part on." The term "one embodiment" means "at least one embodiment"; the term "another embodiment" means "at least one additional embodiment"; the term "another embodiment" means "at least one other embodiment"; and the term "some embodiments" means "at least some embodiments". Related definitions of other terms will be given in the following description.

It should be noted that the concepts of "first", "second" and the like mentioned in the present disclosure are only used to differentiate different apparatuses, modules or units, and are not used to define the order or interdependence of the functions performed by these apparatuses, modules or units.

It should be noted that the modifications of "one" and "more than one" mentioned in the present disclosure are schematic rather than limiting, and the person skilled in the art should understand that, unless otherwise expressly stated in the context, they should be understood as "one or more".

The names of the messages or information interacting between a plurality of apparatuses of the disclosure are used for illustrative purposes only and are not intended to limit the scope of those messages or information.

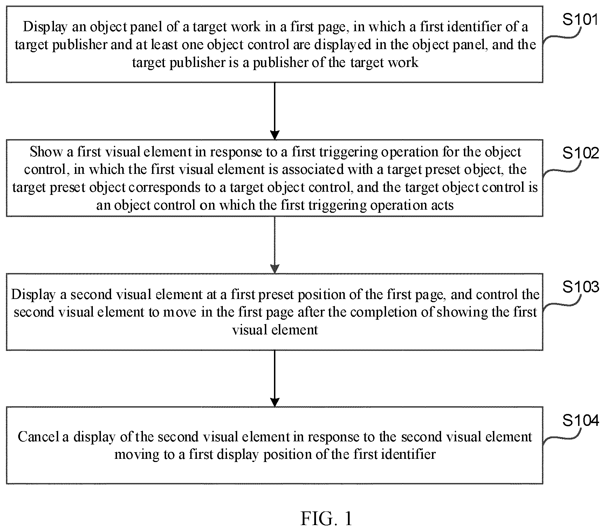

FIG. 1 is a flowchart of an interaction method provided in an embodiment of the present disclosure. The interaction method may be performed by an interaction apparatus that may be implemented by software and/or hardware and may be configured in an electronic device, e.g., configured in a mobile phone or a tablet computer. The interaction method provided by the embodiment of the present disclosure is applicable to a scenario of giving a visual item to a publisher when watching a work published by the publisher. As shown in FIG. 1, the interaction method provided by the embodiments may include the following steps.

S101: display an object panel of a target work in a first page, in which a first identifier of a target publisher and at least one object control are displayed in the object panel, and the target publisher is a publisher of the target work.

The target work may be a work currently watched by a user, such as a video, an article, an image-text content, or other multimedia contents. The image-text content may be a media content composed of at least one image and text, such as a media content in which a plurality of images are switched for showing in a preset order while the text is shown on the images. The object panel may be a panel for showing an object control of a preset object. The preset object may be, for example a virtual object, such as a virtual item for a current user to send to the target publisher. The first page may be a page in which the object panel is displayed, such as a media content showing page. The target publisher may be the publisher of the target work. The first identifier may be an identifier of the target publisher, such as an avatar of the target publisher. The object control may be a control for triggering performing a first triggering operation, such as a control for sending a preset object to the target publisher.

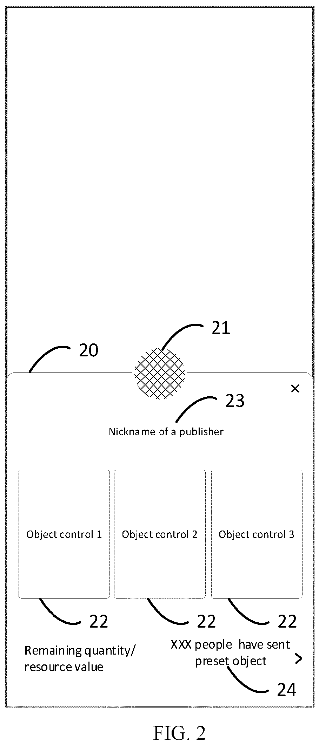

In this embodiment, when the current user wants to view the object panel of the target work, a current application may be indicated by a corresponding triggering operation to display the object panel of the target work in the first page. Correspondingly, when the current application receives the triggering operation of the current user, the object panel 20 of the target work may be displayed in the first page. The first identifier 21 of the target publisher and at least one object control 22 are displayed in the object panel 20, as shown in FIG. 2, and the showing of the target work may be continued or paused.

S102: show a first visual element in response to a first triggering operation for the object control, in which the first visual element is associated with a target preset object, the target preset object corresponds to a target object control, and the target object control is an object control on which the first triggering operation acts.

The first triggering operation may be a triggering operation for triggering any object control displayed in the object panel. The target object control may be an object control triggered by the first triggering operation. The target preset object may be a preset object corresponding to the target object control. The first visual element may be a visual element associated with the target preset object. For example, when the object control is configured to send a flower to the target publisher, the first visual element may be a two-dimensional or three-dimensional image of the flower, or the like.

Exemplarily, when it is detected that the user triggers a certain object control displayed in the object panel, the target preset object corresponding to the object control triggered by the user (i.e., the target object control) may be determined, and the first visual element associated with the target preset object may be displayed.

S103: display a second visual element at a first preset position of the first page, and control the second visual element to move in the first page after the completion of showing the first visual element.

The first preset position may be regarded as a display position of the second visual element, which may be set by the operational staff of the current application, the current user, or the target publisher. Exemplarily, the first preset position may be outside the object panel, e.g., a preset position at the top of the first page. The second visual element may be a preset visual element, such as a gold coin or other visual elements.

In particular, after the completion of showing the first visual element, the second visual element may be displayed at the first preset position of the first page, and the second visual element may be controlled to move in the first page. For example, the second visual element is controlled to move toward the first identifier displayed in the object panel.

In this embodiment, the quantity of the second visual elements displayed may be set flexibly. For example, a set quantity of second visual elements may be displayed at the first preset position of the first page without consideration of which object control the target object control triggered by the current user is; or the second visual elements of which the quantity is associated with the target object control and/or associated with a target sending quantity corresponding to the target object control may also be displayed at the first preset position of the first page with consideration of the target object control triggered by the current user. In this case, optionally, the quantity of the second visual elements is associated with the target object control and/or the target sending quantity corresponding to the target object control. For example, not exactly same display quantities of the second visual elements may be set for the object controls according to the quantity and/or values of the preset objects which the target object controls are configured to trigger sending. Thus, after the completion of showing the first visual element, the second visual elements of which the quantity is associated with the target object control and/or the quantity of the preset objects which the target object control is configured to indicate to send are displayed. When a plurality of second visual elements need to be shown, the visual elements may be shown simultaneously or not simultaneously, which will not be limited here.

In some implementations, after displaying the second visual element at the first preset position of the first page, the displayed second visual element may be controlled to move toward the first display position of the first identifier. For example, the second visual element is controlled to directly move from the first preset position to the first display position of the first identifier. In this case, optionally, the controlling the second visual element to move in the first page includes: controlling the second visual element to move from the first preset position to the first display position of the first identifier. The first display position may be the display position of the first identifier, which may be a certain position within a display region in which the first identifier is located, such as a certain position at a left side, a right side, an upper side, or a lower side of the first identifier, or the center of the first identifier. This embodiment does not impose a limitation on the first display position.

In some implementations, after displaying the second visual element at the first preset position of the first page, the second visual element may be firstly controlled to move toward a certain other position than the first preset position and the first display position of the first identifier, and after the second visual element moves to the other position, it may be then controlled to move toward the first display position of the first identifier.

The other position may be any preset position in the first page. For example, the other position may be a boundary position of the object panel. In this case, optionally, the controlling the second visual element to move in the first page includes: controlling the second visual element to move from the first preset position to a preset boundary of the object panel until the second visual element comes into contact with the preset boundary or a second visual element which stops moving; and in response to a duration that the second visual element stops moving reaching a second preset duration, controlling the second visual element to move to the first display position of the first identifier. The preset boundary may be a boundary of the object panel, such as an upper boundary or a lower boundary of the object panel. The second preset duration may be set flexibly as needed. For example, the second preset duration may be set as 1s or 2s, etc.

Exemplarily, after the completion of showing the first visual element, the second visual element may be displayed at the first preset position of the first page, and the second visual element may be controlled to move from the first preset position toward the preset boundary of the object panel. For example, the second visual element is controlled to move from the first preset position toward the upper boundary of the object panel. When the second visual element is in contact with the preset boundary of the object panel or other second visual element stopping moving, the second visual element is controlled to stop moving so as to present a visual effect that the second visual elements fall onto the object panel. In response to a duration that the second visual element stops moving reaching the second preset duration, e.g., in response to a duration that the second visual element falls onto the object panel reaching the second preset duration, the second visual element may be controlled to move toward the first display position of the first identifier.

It can be appreciated that the duration that the second visual element stops moving reaching the second preset duration may be the duration that each second visual element itself stops moving reaching the second preset duration. For example, for each second visual element, in response to the duration that the second visual element stops moving reaching the second preset duration, the second visual element is controlled to move toward the first display position of the first identifier. Or, it may be the duration that a certain second visual element stops moving reaching the second preset duration, such as the duration that a first second visual element stops moving reaching the second preset duration or the duration of a last second visual element stops moving reaching the second preset duration. In this case, exemplarily, in response to the duration that the second visual element stops moving reaching the second preset duration, the second visual elements that have fallen onto the object panel may be controlled to all move toward the first display position of the first identifier.

When the second visual element is controlled to move in the first page, exemplarily, it may be set as needed that the second visual element is controlled from the first preset position toward the first display position of the first identifier each time, or each time, the second visual element is controlled to firstly move from the first preset position toward the preset boundary of the object panel and then move from the preset boundary of the object panel toward the first display position of the first identifier. Alternatively, the second visual element may also be controlled to move in the first page in a not exactly same way according to different preset objects sent by the current user. For example, when the current user sends a preset object of a set type, the second visual element is controlled to move from the first preset position toward the first display position of the first identifier. When the current user sends other preset objects than the set type, the second visual element is controlled to firstly move from the first preset object toward the preset boundary of the object panel and then from the preset boundary of the object panel toward the first display position of the first identifier. This is not limited in the present embodiment.

S104: cancel a display of the second visual element in response to the second visual element moving to a first display position of the first identifier.

In this embodiment, in response to the second visual element moving to the first display position of the first identifier, the display of the second visual element may be cancelled. For example, the display of the second visual element moving to the first display position is cancelled so as to present a visual effect that the second visual element is retracted into the first identifier, thus presenting a visual effect that the target publisher gains the second visual element.

In this embodiment, the object control may also be configured to trigger sending the preset object to the target publisher. For example, when the first triggering operation for a certain object control is received, the preset object corresponding to the object control is sent to the target publisher. Thus, the current user may give the preset object corresponding to the object control to the target publisher by triggering the object control. In this case, optionally, the interaction method provided by this embodiment further includes: sending the target preset object to the target publisher in response to the first triggering operation for the object control.

In some implementations, at least two object controls are displayed in the object panel, and the target preset object corresponding to a target object control includes: the target preset object being a preset object corresponding to the target object control; and/or a target sending quantity of the target preset object being a sending quantity corresponding to the target object control.

The target sending quantity may be the quantity of the preset objects sent to the target publisher in response to the first triggering operation received currently.

In the above implementations, as shown in FIG. 2, at least two object controls 22 may be displayed in the object panel 20, and different object controls 22 correspond to different preset objects and/or different sending quantities. Thus, the target preset object may be a preset object corresponding to the target object control triggered by the current user, and/or the target sending quantity of the target preset objects is a sending quantity corresponding to the target object control triggered by the current user. For example, when the first triggering operation for a certain object control 22 is received, a preset object corresponding to the object control 22 may be sent to the target publisher, and/or the preset objects of which the quantity is the sending quantity corresponding to the object control 22 are sent to the target publisher.

In this embodiment, when it is detected that the user triggers a certain object control displayed in the object panel, it may be determined that the first triggering operation is received.

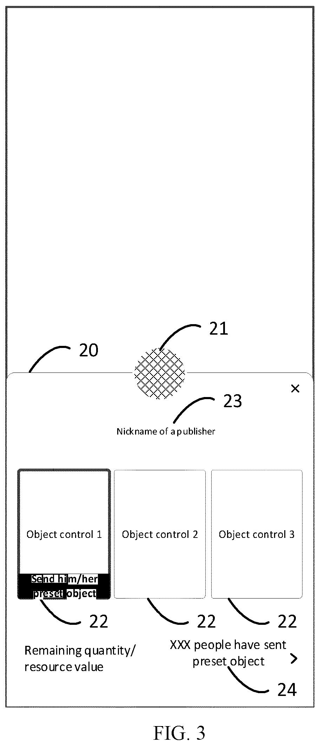

In this embodiment, it may also be determined that the first triggering operation is received only when it is detected that the user triggers a certain object control 22 in a set display state in the object panel 20. For example, when the object panel 20 of the target work is displayed, at most one object control 22 in the object panel 20 may be displayed as a first display state (i.e., the set display state), and other object controls 22 than the at most one object control 22 in the object panel 20 may be displayed as a second display state. Thus, when it is detected that the current user triggers a certain object control 22 displayed in the object panel 20, in response to the object control 22 being in the first display state, it may be determined that the first triggering operation is received; in response to the object control 22 being in the second display state, the object control 22 may be switched from the second display state to the first display state, and other object controls 22 than the object control 22 in the object panel 20 are displayed as the second display state, as shown in FIG. 3 (in which the object control 1 is triggered for example); and when it is detected that the user triggers the object control 22 in the first display state again, it is determined that the first triggering operation is received to avoid mistaken sending of the preset object.

When the first triggering operation is performed by triggering the object control in the set display state, exemplarily, any position of the object control may be triggered; or, the preset position of the object control may also be triggered. For example, a bottom position of the object control (e.g., a black background region at the bottom of the object control 1 shown in FIG. 3) is triggered. This embodiment does not impose limitations on the triggering manner and the preset position of the object control.

In some implementations, one object control and the target sending quantity of the target preset objects are displayed in the object panel. After displaying the object panel of the target work in the first page, the interaction method further includes: switching the target sending quantity displayed in the object panel in response to a second triggering operation.

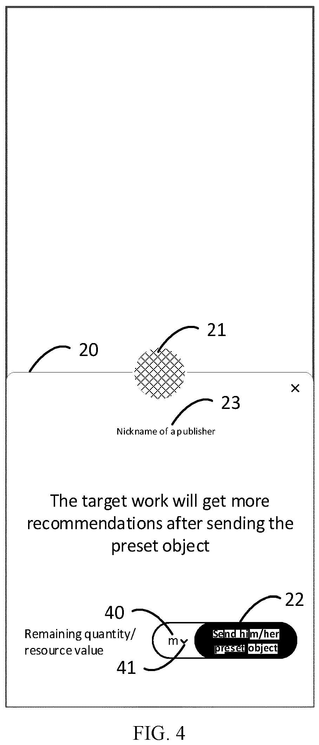

In the above implementations, as shown in FIG. 4 (in which the target sending quantity of the target preset objects is switchable for example), only one object control 22 may also be displayed in the object panel 20. In this case, the target sending quantity 40 (e.g., quantity m shown in FIG. 4) of the target preset objects and/or the preset objects may be further displayed in the object panel 20. Thus, the current user may switch the target sending quantity 40 of the target preset objects and/or the preset objects displayed in the object panel 20 by a corresponding triggering operation, thus switching the target sending quantity 40 of the target preset objects and/or the preset objects sent when triggering the object control 22 displayed in the object panel 20. The following description is made by taking as an example that the target sending quantity 40 of the target preset objects is switched.

The second triggering operation may be a triggering operation for modifying the target sending quantity displayed in the object panel, such as an operation for triggering a display region of the target sending quantity, an operation for triggering a certain candidate sending quantity, or an operation for triggering an input completion control, and the like.

In particular, when the second triggering operation is received, the target sending quantity displayed in the object panel may be switched. For example, the target sending quantity displayed in the object panel is switched to a candidate sending quantity triggered by the current user or a quantity to be sent input by the current user. Alternatively, a plurality of sending quantities are preset, and according to a preset order of the sending quantities, the target sending quantity displayed in the object panel is switched to next sending quantity adjacent to the target sending quantity before switching in the preset order, and so on.

In some implementations, after the displaying the object panel of the target work in the first page, the interaction method further includes: displaying a quantity panel in response to a quantity panel displaying operation, in which at least two candidate sending quantities are displayed in the quantity panel. The switching the target sending quantity displayed in the object panel in response to the second triggering operation includes: cancelling the display of the quantity panel in response to the second triggering operation for a target candidate sending quantity, and switching the target sending quantity displayed in the object panel to the target candidate sending quantity.

The panel displaying operation may be a triggering operation for indicating to display the quantity panel, such as an operation for triggering a display region of the target sending quantity in the object panel or triggering a quantity panel display control displayed in the object panel. The quantity panel may be a panel for displaying the preset candidate sending quantities. A plurality of candidate sending quantities may be displayed in the panel. The target candidate sending quantity may be a candidate sending quantity on which the target triggering operation acts, such as a candidate sending quantity triggered by the current user.

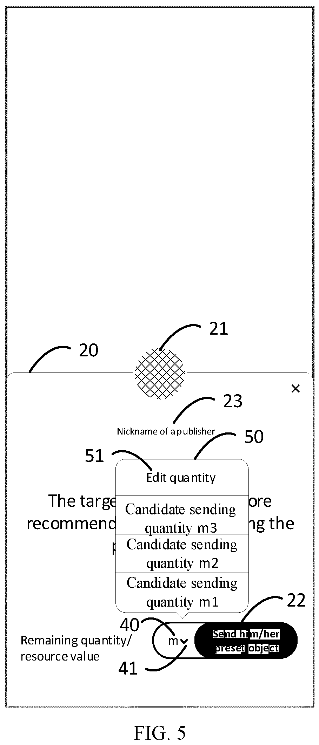

In particular, when the current application receives the panel displaying operation, e.g., when it is detected that the current user triggers the quantity panel display control 41 (as shown in FIG. 4), the quantity panel 50 may be displayed, and a plurality of candidate sending quantities may be displayed in the quantity panel 50, as shown in FIG. 5.

Thus, the current user may trigger the candidate sending quantity that the current user wants to select.

Correspondingly, when the current application detects that the user triggers a certain candidate sending quantity displayed in the quantity panel 50, it may be determined that the second triggering operation is received. In response to the second triggering operation, the target sending quantity 40 displayed in the object panel 20 may be switched to the candidate sending quantity triggered by the current user for displaying, and the display of the quantity panel 50 may be further cancelled.

In the above implementations, the user may switch the target sending quantity displayed in the object panel by triggering the candidate sending quantity in the quantity panel. Thus, the operation required for a user to switch the target sending quantity displayed in the object panel can be simplified.

In some implementations, after the displaying the object panel of the target work in the first page, the interaction method further includes: in response to a quantity editing operation, displaying a quantity input region and a digital virtual keyboard, in which the digital virtual keyboard is configured to input the quantity to be sent of the target preset objects in the quantity input region. The switching the target sending quantity displayed in the object panel in response to the second triggering operation includes: cancelling the display of the quantity input region and the digital virtual keyboard in response to the second triggering operation for an input completion control, and switching the target sending quantity displayed in the object panel to the quantity to be sent input in the quantity input region.

The quantity editing operation may be a triggering operation for indicating to edit the target sending quantity displayed in the object panel, such as a triggering operation for triggering the display region of the target sending quantity or triggering a quantity editing control displayed in the quantity panel. The quantity input region may be a region for a user to input the quantity to be sent of the target preset objects.

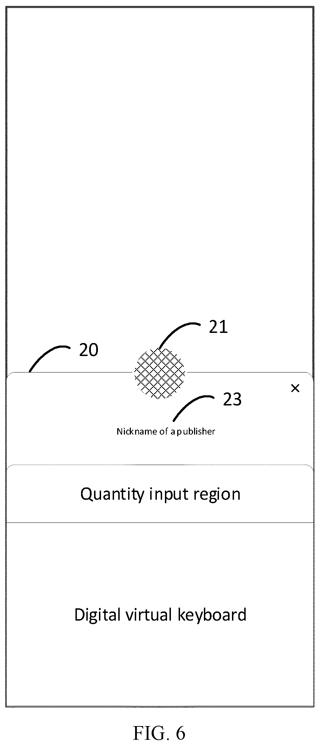

In particular, when the current application receives the quantity editing operation, e.g., when it is detected that the current user triggers the quantity editing control 51 (as shown in FIG. 5) displayed in the quantity panel 50, the quantity input region and the digital virtual keyboard may be displayed, as shown in FIG. 6.

Thus, the current user may input the quantity to be sent of the target preset objects that the current user wants to send in the quantity input region by the digital virtual keyboard, and may trigger the input completion control (not shown in FIG. 6) after the completion of sending.

Correspondingly, when the current application detects that the user triggers the input completion control, it may be determined that the second triggering operation is received. In response to the second triggering operation, the target sending quantity 40 displayed in the object panel 20 may be switched to the quantity to be sent input by the current user in the quantity input region for displaying, and the display of the quantity input region and the digital virtual keyboard may be further cancelled.

In the above implementations, the user may switch the target sending quantity displayed in the object panel to the quantity to be sent input by the user through the digital virtual keyboard so that the user may send any quantity of target preset objects to the target publisher. It can meet different sending needs of the user.

In this embodiment, when the user sends the target preset object to the target publisher, the total quantity of the target preset objects continuously sent by the user may be counted, and the total quantity may be shown to further enrich shown contents when the user sends the target preset object to the target publisher. It is convenient for the user to know the quantity of the target preset objects that have been continuously sent by the user. In this case, optionally, the interaction method provided by this embodiment may further include: counting the target preset objects sent by the current user to the target publisher, and displaying a total quantity obtained by counting until no first triggering operation acting on the target object control is received again within a first preset duration.

The first preset duration may be construed as a maximum duration used as an interval at which the first triggering operation is performed continuously, which may be set as needed. For example, the first preset duration can be set as 1s or 2s, etc.

Exemplarily, when the first triggering operation performed by the current user is received, whether the same first triggering operation is received within the first preset duration before receiving the first triggering operation may be determined; when it is, with a counting result at a previous time of receiving the first triggering operation as a counting starting point, the quantity of the target preset objects sent by the current user is counted continuously; and when it is not, with 0 as a counting starting point, the quantity of the target preset objects sent by the current user is counted. After the total quantity of the target preset objects continuously sent currently by the current user is obtained by counting, the total quantity may be displayed. Moreover, whether the same first triggering operation is received again within the first preset duration after receiving the first triggering operation may be further determined; when it is, counting is continued; and when it is not, the current counting is finished, and the display of the total quantity is cancelled.

In this embodiment, the display manner of the total quantity of the target preset objects continuously sent currently by the current user may be set flexibly. For example, when the first triggering operation is received each time, the total quantity obtained by current counting may be displayed; or, the total quantity may also be displayed only when the total quantity obtained by current counting is greater than or equal to n; and when the total quantity obtained by current counting is less than n, the total quantity is not displayed to further enrich the display manners of the total quantity. The n may be a positive integer. For example, n may be set to 2, 3, or 5, etc., which will not be limited here.

The interaction method provided by this embodiment includes: displaying the object panel of the target work in the first page, in which the first identifier of the target publisher and at least one object control are displayed in the object panel; and the target publisher is the publisher of the target work; showing the first visual element in response to the first triggering operation for the object control, in which the first visual element is associated with the target preset object that corresponds to the target object control, and the target object control is the object control on which the first triggering operation acts; after the completion of showing the first visual element, displaying the second visual element at the first preset position of the first page, and controlling the second visual element to move in the first page; and cancelling the display of the second visual element in response to the second visual element moving to the first display position of the first identifier. With the above technical solutions in this embodiment, when the user triggers the object control, the first visual element and the second visual element are shown one after another, and the page display manners when the user triggers the object control can be enriched.

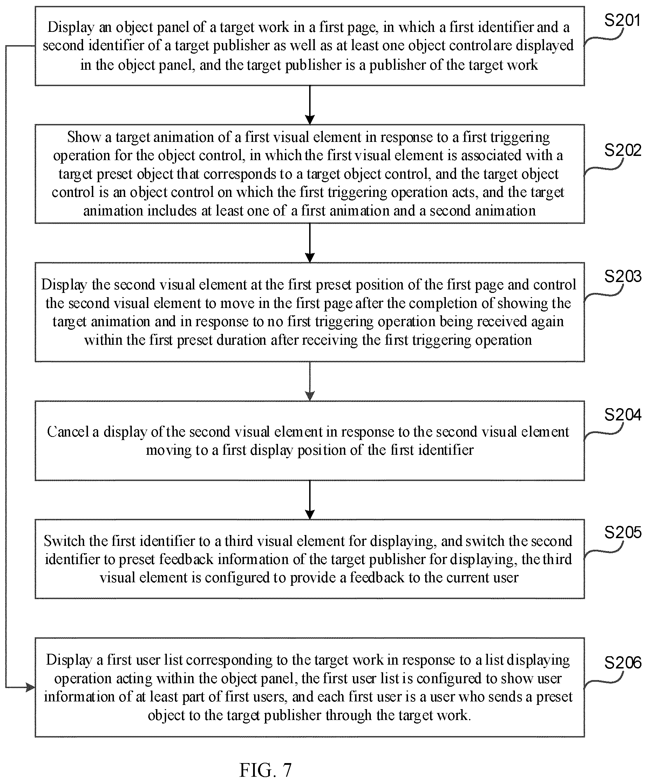

FIG. 7 is a flowchart of another interaction method provided by an embodiment of the present disclosure. The solution in this embodiment may be combined with one or more optional solutions in the above embodiment. Optionally, the showing the first visual element includes: showing a target animation of the first visual element, in which the target animation includes at least one of a first animation and a second animation.

Optionally, after the displaying the object panel of the target work in the first page, the interaction method further includes: displaying an object sending list corresponding to the target work in response to a list displaying operation acting within the object panel, in which the object sending list is configured to show object information of the preset objects sent by at least part of users to the target publisher through the target work.

Optionally, the displaying the second visual element at the first preset position of the first page includes: in response to no first triggering operation being received again within the first preset duration after receiving the first triggering operation, displaying the second visual element at the first preset position of the first page.

Optionally, a second identifier of the target publisher is further displayed in the object panel, and after the cancelling the display of the second visual element, the interaction method further includes: switching the first identifier to a third visual element for displaying, and switching the second identifier to preset feedback information of the target publisher for displaying, in which the third visual element is configured to provide a feedback to the current user.

Correspondingly, as shown in FIG. 7, the interaction method provided by this embodiment may include the following steps.

S201: display an object panel of a target work in a first page, and perform S202 or S206, in which a first identifier and a second identifier of a target publisher as well as at least one object control are displayed in the object panel, and the target publisher is a publisher of the target work.

In this embodiment, as shown in FIG. 2-6, the second identifier 23 of the target publisher may be further displayed in the object panel 20 in addition to the first identifier 21 of the target publisher. The second identifier 23 may be regarded as the identifier of the target publisher, which may be a different identifier of the target publisher from the first identifier 21. Exemplarily, the first identifier 21 may be an avatar of the target publisher, and the second identifier 23 may be a nickname of the target publisher.

S202: show a target animation of a first visual element in response to a first triggering operation for the object control, in which the first visual element is associated with a target preset object that corresponds to a target object control, and the target object control is an object control on which the first triggering operation acts, and the target animation includes at least one of a first animation and a second animation.

The target animation may be construed as an animation of the first visual element that is shown in response to the first triggering operation for the object control, and may include the first animation and/or the second animation. The first animation and the second animation may be different animations of the first visual element.

Exemplarily, the first animation may be configured to present a picture in which the first visual element moves according to a first rule, e.g., configured to present a picture in which the first visual element moves toward a certain publisher identifier displayed in the object panel. Optionally, the first animation is configured to present a picture in which the first visual element moves from a second preset position of the object panel toward a second display position of the first identifier. For example, in the first animation, the first visual element may appear from the second preset position of the object panel and move from the second preset position toward the second display position of the first identifier. The display of the first visual element is cancelled when moving to the second preset position. The second animation may be configured to present a picture in which the first visual element moves according to a second rule, e.g., configured to present a picture in which the first visual element moves toward a direction toward a screen according to a set trajectory or a random trajectory.

The first animation and the second animation may have different animation contents, showing sizes and/or showing positions. Exemplarily, the quantity of the first visual elements shown in the second animation may be greater than the quantity of the first visual elements shown in the first animation. For example, the second animation may be configured to show a picture in which a large quantity of the first visual elements move, and the first animation may be configured to show a picture in which one first visual element or the first visual elements of which the quantity is the same as a target sending quantity move(s). The showing size of the second animation may be greater than that of the first animation. For example, the second animation may be shown in full screen. The first animation may be shown within a preset region, e.g., shown within the object panel.

The second preset position may be a certain position within the object panel. The second display position may be a certain display position of the first identifier, which may be the same or different position as or from the first display position. The second preset position and the second display position can both be set as needed, which will not be limited here.

In this embodiment, the first visual element may be shown by showing the target animation of the first visual element. For example, the first animation or the second animation of the first visual element may be shown in response to the first triggering operation for the object control. The first animation of the first visual element is shown, and the second animation of the first visual element is shown continuously after the completion of showing the first animation. The second animation of the first visual element is shown, and the first animation of the first visual element is shown continuously after the completion of showing the second animation. Alternatively, the first animation and the second animation of the first visual element may be shown simultaneously.

In some implementations, the showing the target animation of the first visual element includes at least one selected from the of following: in response to a duration from the first triggering operation received currently to the first triggering operation received last time being greater than a first preset duration, showing the first animation of the first visual element, and after the completion of showing the first animation, continuing to show the second animation of the first visual element; and in response to the duration from the first triggering operation received currently to the first triggering operation received last time being less than or equal to the first preset duration, showing the second animation of the first visual element.

In the above implementations, when the current user continuously performs the first triggering operation, the second animation of the first visual element may be shown in response to each first triggering operation continuously performed by the current user. When the current user starts to continuously perform the first triggering operation, e.g., when the first triggering operation continuously performed by the user for the first time is received, the first animation of the first visual element is shown. In other words, assuming that the current user continuously performs k (k is a positive integer) first triggering operations, when a first one of the k first triggering operations is received, the first animation and the second animation of the first visual element may be shown in response to the first triggering operation; and when the k-1 first triggering operations of the k first triggering operations (i.e., the 2nd to kth first triggering operations performed by the current user) are received, only the second animation of the first visual element is shown in response to the first triggering operations, while the first animation of the first visual element is no longer shown.

When the current user does not continuously perform the first triggering operation, e.g., when the first triggering operations discontinuously performed by the current user are received, the first animation and the second animation of the first visual element may be shown in response to the first triggering operation.

Here, the first triggering operation continuously performed may be construed as a first triggering operation having a time interval of less than or equal to the first preset duration from at least one other first triggering operation performed by the current user. For example, when the first triggering operation performed by the current user is received, when the current user has performed the same first triggering operation once within the first preset duration before receiving the first triggering operation and/or the current user performs the same first triggering operation again within the first preset duration after receiving the first triggering operation, it may be regarded that the first triggering operation currently performed by the current user is the first triggering operation continuously performed; otherwise, it may be considered that the first triggering operation currently performed by the current user is the first triggering operation discontinuously performed.

Exemplarily, when the first triggering operation performed by the current user is received, whether the current user has performed the same first triggering operation within the first preset duration before receiving the first triggering operation can be determined, that is, whether the duration from the first triggering operation received currently to the same first triggering operation received last time is less than or equal to the first preset duration is determined; when it is, the second animation of the first visual element is shown in response to the first triggering operation received currently; and when it is not, the first animation of the first visual element is shown in response to the first triggering operation received currently, and after the completion of the first animation, the second animation of the first visual element is continuously shown.

In some implementations, the showing the target animation of the first visual element includes at least one selected from the group of following: in response to a target quantity not meeting a preset condition, showing a first animation of the first visual element; and in response to the target quantity meeting the preset condition, showing the second animation of the first visual element; the target quantity is a target sending quantity of the target preset object for this time, or a total quantity of the target preset object sent continuously; and the preset condition includes at least one selected from the following of: the target quantity changing from being less than a first preset quantity to being greater than or equal to the first preset quantity, the target quantity being greater than or equal to a second preset quantity, or, the target quantity being equal to a third preset quantity.

The target quantity may be the target sending quantity of the target preset objects sent when the current user performs the first triggering operation currently, or the total quantity of the target preset objects that have been sent currently by the current user by continuously performing the first triggering operation, that is, the total quantity of the target preset objects continuously sent by the current user. Exemplarily, when the current user continuously performs the first triggering operation, the target quantity may be the total quantity of the target preset objects continuously sent by the current user by continuously performing the first triggering operation. When the current user discontinuously performs the first triggering operation, the target quantity may be the target sending quantity of the target preset object sent currently by the current user by performing the first triggering operation.

The preset condition may be considered as a preset showing condition for the second animation, such as the target quantity changing from being less than the first preset quantity to being greater than or equal to the first preset quantity, the target quantity being greater than or equal to the second preset quantity, and/or the target quantity being equal to the third preset quantity, etc. The first preset quantity, the second preset quantity, and the third preset quantity can all be set as needed. For example, one or more first preset quantities, one second preset quantity, and one or more third preset quantities may be set. The values of two of the first preset quantity, the second preset quantity, and the third preset quantity may be the same or different.

In the above implementations, in response to the target quantity meeting the preset condition, the second animation may be shown in response to the first triggering operation received currently; and in response to the target quantity not meeting the preset condition, the first animation may be shown in response to the first triggering operation received currently.

Exemplarily, when the preset condition includes the target quantity changing from being less than the first preset quantity to being greater than or equal to the first preset quantity, the second animation may be shown only when the target quantity changes from being less than the first preset quantity to being greater than or equal to the first preset quantity. For example, in response to the first triggering operation received currently, whether the target quantity before receiving the first triggering operation currently is less than the first preset quantity and whether the target quantity updated based on the first triggering operation received currently is greater than or equal to the first preset quantity are determined; when it is, the second animation is shown; and when it is not, the first animation is shown.

When the preset condition includes the target quantity being greater than or equal to the second preset quantity, the second animation may be shown when the target quantity is greater than or equal to the second preset quantity. For example, in response to the first triggering operation received currently, whether the target quantity updated based on the first triggering operation received currently is greater than or equal to the second preset quantity is determined; when it is, the second animation is shown; and when it is not, the first animation is shown.

When the preset condition includes the target quantity being equal to the third preset quantity, the second animation only when the target quantity is equal to the third preset quantity. For example, in response to the first triggering operation received currently, whether the target quantity updated based on the first triggering operation received currently is equal to a certain third preset quantity is determined; when it is, the second animation is shown; and when it is not, the first animation is shown.

S203: display the second visual element at the first preset position of the first page and control the second visual element to move in the first page after the completion of showing the target animation and in response to no first triggering operation being received again within the first preset duration after receiving the first triggering operation.

In this embodiment, after the completion of continuously performing the first triggering operation for a plurality of times or discontinuously performing the first triggering operation by the user, the second visual element may be displayed to further enrich the display manners of the second visual element and the responding manners of the first triggering operation.

Exemplarily, after the first triggering operation performed by the current user is received, the target animation of the first visual element may be shown, and whether the same first triggering operation is received again within the first preset duration after currently receiving the first triggering operation is determined; when it is, after the completion of showing the target animation, the second visual element is not displayed, and instead, the target animation of the first visual element is shown again in response to the first triggering operation received again; and when it is not, after the completion of showing the target animation, the second visual element is displayed at the first preset position of the first page, and the second visual element is controlled to move in the first page.

In this embodiment, without consideration of the preset object sent by the current user, after the completion of showing the target animation each time and when the same first triggering operation is not received again within the first preset duration after receiving the first triggering operation, the second visual element is displayed at the first preset position of the first page. Alternatively, with consideration of the preset object sent by the current user, only when the preset object sent by the current user meets the set condition, in response to the completion of showing the target animation and when the same first triggering operation is not received again within the first preset duration after receiving the first triggering operation, the second visual element is displayed at the first preset position of the first page. When the preset object sent by the current user does not meet the set condition, even though the showing of the target animation is completed and the same first triggering operation is not received again within the first preset duration after receiving the first triggering operation, the second visual element is not displayed in the first page. The set condition may be set flexibly as needed.

S204: cancel a display of the second visual element in response to the second visual element moving to a first display position of the first identifier.

S205: switch the first identifier to a third visual element for displaying, and switch the second identifier to preset feedback information of the target publisher for displaying, the third visual element is configured to provide a feedback to the current user.

The third visual element may be a visual element for providing a feedback for the target preset object sent by the current user, such as a heart-shaped visual element or visual elements in other shapes, which may be set by the operational staff or the target publisher. The preset feedback information may be information for providing a feedback for the target preset object sent by the current user, and the information content thereof may be preset by the target publisher.

In this embodiment, after the completion of showing the target animation each time, the third visual element and the preset feedback information of the target publisher may be displayed. In consideration of a state of continuously showing the target animation when the current user continuously performs the first triggering operation for a plurality of times, the third visual element and the preset feedback information of the target publisher may also be displayed after the completion of continuously performing the first triggering operation for a plurality of times or discontinuously performing the first triggering operation by the current user. As a result, the conciseness of the first page when the target animation is shown is improved, and excessive interference on the current user watching the target animation is avoided.

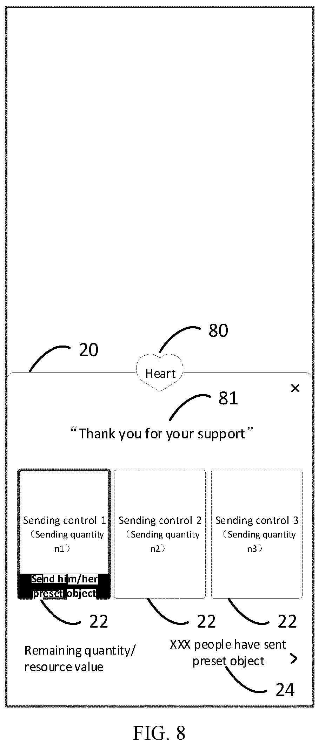

In particular, after the completion of displaying the second visual element, e.g., after each display of the second visual element is cancelled, the first identifier 21 displayed in the object panel 20 may be switched to the third visual element 80 for displaying, and the second identifier 23 displayed in the object panel 20 may be switched to the preset feedback information 81 of the target publisher for displaying. As shown in FIG. 8, for example, the avatar of the target publisher displayed in the object panel 20 may be switched to the third visual element 80 for displaying, and the nickname of the target publisher displayed in the object panel 20 may be switched to the preset feedback information 81 of the target publisher for displaying.

In this embodiment, the manner of switching the first identifier to the third visual element for display may be set flexibly. Optionally, the switching the first identifier to the third visual element for displaying includes: controlling the first identifier to rotate along a preset direction, and switching the first identifier to the third visual element for displaying in a rotation process.

Exemplarily, the first identifier may be controlled to rotate 180° along the preset direction with a center line of the first identifier in the vertical direction of the screen as a rotation axis, and the first identifier is switched to the third visual element for displaying in its rotation process. For example, when the first identifier rotates to 90°, it is switched to the third visual element for displaying; and the third visual element is controlled to continue to rotate 90° along the preset direction. Here, the preset direction may be set flexibly. For example, the preset direction may be set as a clockwise direction or an anticlockwise direction, etc.

Moreover, when a display duration of the third visual element and the preset feedback information reaches a preset time length, the third visual element is switched again to the first identifier for displaying, and the preset feedback information is switched again to the second identifier for displaying.

S206: display a first user list corresponding to the target work in response to a list displaying operation acting within the object panel, the first user list is used to show user information of at least part of first users, and each first user is a user who sends a preset object to the target publisher through the target work.

The list displaying operation may be a triggering operation for indicating to display the first user list corresponding to the target work, such as an operation for triggering a list display control displayed in the object panel. The first user may be a user who sends a preset object to the target publisher through the target work.

The first user list may be a list for showing the user information of at least part of the first users. For example, a preset state value corresponding to each first user may be calculated according to a preset weight corresponding to each preset object. The first users are ranked according to a descending order of the preset state values to generate a ranking result, and the user information of a certain number of (e.g., first 4 or first 10) first users is shown in the first user list in an order from front to back according to the ranking result. Moreover, the user information of the current user may be further displayed in the first user list. For example, when the current user is one of the certain number of first users, the user information of the current user may be shown according to the ranking result. When the current user is not one of the certain number of first users, the user information of the current user may be further shown beyond the certain number of first users. The user information of the first user/current user may include, for example, information such as a user identifier, ranking information and/or a preset state value of the corresponding user.

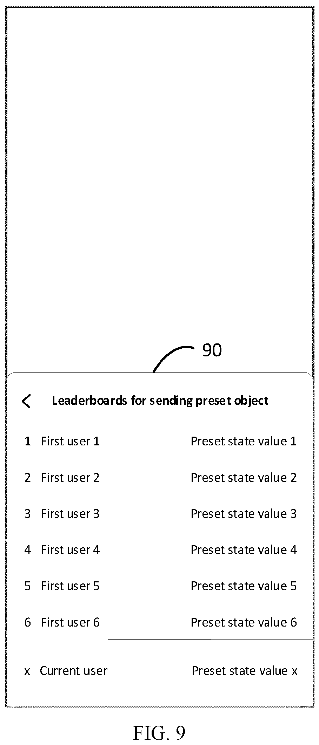

Exemplarily, when the list displaying operation acting within the object panel 20 is received, e.g., when it is detected that the current user triggers the list display control 24 (as shown in FIG. 2) displayed in the object panel 20, the first user list 90 corresponding to the target work can be displayed in response to the list displaying operation, as shown in FIG. 9, such that the current user knows the related information about at least part of first users sending the preset objects to the target publisher through the target work. The display contents of the first page are further enriched.

In some implementations, the interaction method provided by this embodiment further includes: in response to a page display operation for a second page, displaying the second page, and displaying a second user list corresponding to the current user in the second page, in which first user information is shown in the second user list, and the first user information is user information of a second user who sends a preset object to the current user through a work published by the current user within a first time period; and in response to a time period switching operation, switching the first user information displayed in the second user list to second user information, in which the second user information is user information of a second user who sends the preset object to the current user through the work published by the current user within a second time period.

The page display operation may be a triggering operation for indicating to display the second page. The second page may be a page for showing the second user list, such as a preset object page of the current user or a list page of the second user list. Optionally, a preset progress identifier is further displayed in the second page, and a current progress of the preset progress identifier is associated with the preset object received by the current user such that the current user knows the work of the preset object. The preset progress identifier may be a progress identifier associated with the preset object received by the current user. For example, when the preset object is used for increasing the clout of the work published by the corresponding user, the preset progress identifier may be a work clout identifier for the current user, and the current progress of the preset progress identifier may be used for indicating a work clout value of the current user.

The second user list may be a user list for showing the user information of at least part of second users. The second user may be a user who sends a preset object to the current user through a work published by the current user. The first user information may be user information of the second user who sends the preset object to the current user within the first time period, such as quantity information/value information of the preset objects sent by the second user to the current user within the first time period. The second user information may be user information of the second user who sends the preset object to the current user within the second time period, such as quantity information/value information of the preset objects sent by the second user to the current user within the second time period. The first time period and the second time period may be different time periods. Each time period can be set as needed, e.g., a time period such as recent 7 days, recent 30 days, a recent half year and/or from the account registration until now. The time period switching operation may be a triggering operation for a time period corresponding to the current shown user information of the second user, such as a triggering operation for selecting a certain candidate time period.

Exemplarily, when the page display operation for the second page is received, the second page may be displayed; the second user list is displayed in the second page, and the user information of the second user who sends the preset object to the current user through the work published by the current user within the first time period is displayed in the second user list. When the time period switching operation of the current user is received, the user information displayed in the second user list may be switched to the user information of the second user who sends the preset object to the current user through the work published by the current user within the second time period.

Thus, the user can switch to view the quantity information/value information of the preset objects received by the user within different time periods as needed. The display manners of the second user list can be further enriched, and different information viewing requirements of the user can be met.

The interaction method provided by this embodiment can further enrich the sending manners of the preset object, the feedback manners of the preset object, and the functions of the object panel. The object sending experience of the user is enhanced.

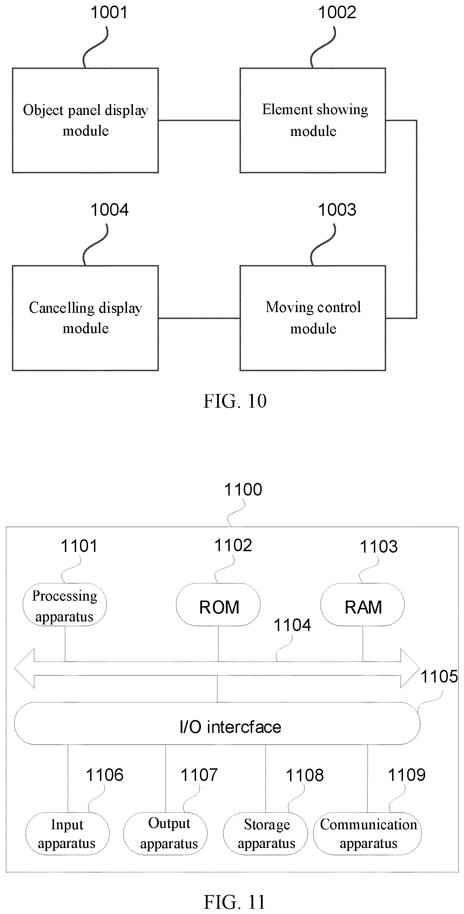

FIG. 10 is a structural block diagram of an interaction apparatus provided in an embodiment of the present disclosure. The interaction apparatus may be implemented by software and/or hardware and may be configured in an electronic device, e.g., configured in a mobile phone or a tablet computer, and by performing the interactive method, can give a visual item to a publisher when a user watches a work published by a publisher. As shown in FIG. 10, the interaction apparatus provided by this embodiment may include an object panel display module 1001, an element showing module 1002, a moving control module 1003, and a cancelling display module 1004.

The object panel display module 1001 is configured to display the object panel of the target work in the first page, in which the first identifier of the target publisher and at least one object control are displayed in the object panel, and the target publisher is the publisher of the target work.

The element showing module 1002 is configured to show the first visual element in response to the first triggering operation for the object control, in which the first visual element is associated with the target preset object, the target preset object corresponds to the target object control, and the target object control is the object control on which the first triggering operation acts.

The moving control module 1003 is configured to, after the completion of showing the first visual element, display the second visual element at the first preset position of the first page, and control the second visual element to move in the first page.

The cancelling display module 1004 is configured to cancel a display of the second visual element in response to the second visual element moving to the first display position of the first identifier.

In the interaction apparatus provided by the embodiments, the object panel display module is configured to display the object panel of the target work in the first page, in which the first identifier of the target publisher and at least one object control are displayed in the object panel, and the target publisher is the publisher of the target work; the element showing module is configured to show the first visual element in response to the first triggering operation for the object control, in which the first visual element is associated with the target preset object, the target preset object corresponds to the target object control, and the target object control is the object control on which the first triggering operation acts. the moving control module is configured to, after the completion of showing the first visual element, display the second visual element at the first preset position of the first page, and control the second visual element to move in the first page; and the cancelling display module is configured to cancel a display of the second visual element in response to the second visual element moving to the first display position of the first identifier. With the above technical solutions in the embodiments, when the user triggers the object control, the first visual element and the second visual element are shown one after another, and the page display manners when the user triggers the object control can be enriched.

In the above embodiments, the element showing module 1002 may be configured to: show a target animation of the first visual element, in which the target animation includes at least one of a first animation and a second animation.

In the above embodiments, the element showing module 1002 may be further configured to implement at least one selected from the group of following: in response to a duration from the first triggering operation received currently to the first triggering operation received last time being greater than a first preset duration, showing a first animation of the first visual element, and after the completion of showing the first animation, continuing to show the second animation of the first visual element; and in response to the duration from the first triggering operation received currently to the first triggering operation received last time being less than or equal to the first preset duration, showing a second animation of the first visual element.

In the above embodiments, the element showing module 1002 may be configured to implement at least one selected from the group of following: in response to a target quantity not meeting a preset condition, showing a first animation of the first visual element; and in response to the target quantity meeting the preset condition, showing the second animation of the first visual element; in which the target quantity is a current target sending quantity of the target preset object, or a total quantity of the target preset object sent continuously; and the preset condition includes at least one selected from the group of following: the target quantity changing from being less than a first preset quantity to being greater than or equal to the first preset quantity; the target quantity being greater than or equal to a second preset quantity; or the target quantity being equal to a third preset quantity.

In the above embodiments, the first animation is configured to present a picture in which the first visual element moves from a second preset position of the object panel toward a second display position of the first identifier.

Further, the interaction method provided by the embodiments may further include: an object sending module, is configured to send the target preset object to the target publisher in response to the first triggering operation for the object control.

In the above embodiments, the at least two object controls are displayed in the object panel, and the target preset object corresponding to the target object control includes: the target preset object being a preset object corresponding to the target object control; and/or a target sending quantity of the target preset object being a sending quantity corresponding to the target object control.

In the above embodiments, one object control and a target sending quantity of the target preset object are displayed in the object panel, the interaction apparatus further includes: quantity switching module, is configured to, after the displaying an object panel of a target work in a first page, switch the target sending quantity displayed in the object panel in response to a second triggering operation.

Further, the interaction method provided by the embodiments may further include: a counting module, is configured to count the target preset object sent by a current user to the target publisher, and display a total quantity obtained by counting until no first triggering operation acting on the target object control is received again within the first preset duration.

Further, the interaction method provided by the embodiments may further include: a first list displaying module, is configured to, after the displaying an object panel of a target work in a first page, display a first user list corresponding to the target work in response to a list displaying operation acting within the object panel, in which the first user list is configured to show user information of at least part of the first user, and the first user is a user who sends a preset object to the target publisher through the target work.

In the above embodiments, the quantity of the second visual element is associated with the target object control and/or a target sending quantity corresponding to the target object control.

In the above embodiments, the moving control module 1003 may be configured to: in response to no first triggering operation being received again within the first preset duration after receiving the first triggering operation, display the second visual element at the first preset position of the first page.

In the above embodiments, the moving control module 1003 may be configured to: control the second visual element to move from the first preset position to the first display position of the first identifier; or control the second visual element to move from the first preset position to a preset boundary of the object panel until the second visual element comes into contact with the preset boundary or a second visual element which stops moving; and in response to a duration that the second visual element stops moving reaching a second preset duration, control the second visual element to move to the first display position of the first identifier.

In the above embodiments, a second identifier of the target publisher is further displayed in the object panel, the interaction apparatus provided by the embodiments may further includes: a feedback module, is configured to, after the cancelling a display of the second visual element, switch the first identifier to a third visual element for displaying, and switch the second identifier to preset feedback information of the target publisher for displaying, in which the third visual element is configured to provide a feedback to the current user.

In the above embodiments, the feedback module may be configured to: control the first identifier to rotate along a preset direction, and switch the first identifier to the third visual element for displaying in a rotation process.

Further, the interaction apparatus provided by the embodiments may include: a second list display module, is configured to, in response to a page display operation for a second page, display the second page, and display a second user list corresponding to the current user in the second page, in which first user information is shown in the second user list, and the first user information is user information of a second user who sends a preset object to the current user through a work published by the current user within a first time period; and in response to a time period switching operation, switch the first user information displayed in the second user list to second user information, in which the second user information is user information of a second user who sends the preset object to the current user through the work published by the current user within a second time period.

In the above embodiments, a preset progress identifier is further displayed in the second page, and a current progress of the preset progress identifier is associated with the preset object received by the current user.

The interaction device provided by the embodiments of the present disclosure can execute the interaction method provided by any embodiment of the present disclosure, and has the corresponding functional module and beneficial effect of executing the interaction method. For technical details not exhaustively described in this embodiment, refer to the interaction method provided by any embodiment of the present disclosure.

Referring to FIG. 11, FIG. 11 is a schematic structural diagram of an electronic device 1100 suitable for implementing some embodiments of the present disclosure. The electronic devices in some embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), a wearable electronic device or the like, and fixed terminals such as a digital TV, a desktop computer, or the like. The electronic device illustrated in FIG. 11 is merely an example, and should not pose any limitation to the functions and the range of use of the embodiments of the present disclosure.

As illustrated in FIG. 11, the electronic device 1100 may include a processing apparatus 1101 (e.g., a central processing unit, a graphics processing unit, etc.), which can perform various suitable actions and processing according to a program stored in a read-only memory (ROM) 1102 or a program loaded from a storage apparatus 1108 into a random-access memory (RAM) 1103. The RAM 1103 further stores various programs and data required for operations of the electronic device 1100. The processing apparatus 1101, the ROM 1102, and the RAM 1103 are interconnected by means of a bus 1104. An input/output (I/O) interface 1105 is also connected to the bus 1104.

Usually, the following apparatus may be connected to the I/O interface 1105: an input apparatus 1106 including, for example, a touch screen, a touch pad, a keyboard, a mouse, a camera, a microphone, an accelerometer, a gyroscope, or the like; an output apparatus 1107 including, for example, a liquid crystal display (LCD), a loudspeaker, a vibrator, or the like; a storage apparatus 1108 including, for example, a magnetic tape, a hard disk, or the like; and a communication apparatus 1109. The communication apparatus 1109 may allow the electronic device 1100 to be in wireless or wired communication with other devices to exchange data. While FIG. 11 illustrates the electronic device 1100 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 1109 and installed, or may be installed from the storage apparatus 1108, or may be installed from the ROM 1102. When the computer program is executed by the processing apparatus 1101, the above-mentioned functions defined in the methods of some embodiments of the present disclosure are performed.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementation modes, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The above-mentioned computer-readable medium carries one or more programs, and when the one or more programs are executed by the electronic device, the electronic device is caused to: display an object panel of a target work in a first page, in which a first identifier of a target publisher and at least one object control are displayed in the object panel, and the target publisher is a publisher of the target work; show a first visual element in response to a first triggering operation for the object control, in which the first visual element is associated with a target preset object, the target preset object corresponds to a target object control, and the target object control is an object control on which the first triggering operation acts; display a second visual element at a first preset position of the first page, and control the second visual element to move in the first page after the completion of showing the first visual element; and cancel a display of the second visual element in response to the second visual element moving to a first display position of the first identifier.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

According to one or more embodiments of the present disclosure, Embodiment 1 provides an interaction method, including:
displaying an object panel of a target work in a first page, in which a first identifier of a target publisher and at least one object control are displayed in the object panel, and the target publisher is a publisher of the target work;
showing a first visual element in response to a first triggering operation for the object control, in which the first visual element is associated with a target preset object, the target preset object corresponds to a target object control, and the target object control is an object control on which the first triggering operation acts;
displaying a second visual element at a first preset position of the first page, and controlling the second visual element to move in the first page after the completion of showing the first visual element; and
cancelling a display of the second visual element in response to the second visual element moving to a first display position of the first identifier.

According to one or more embodiments of the present disclosure, Embodiment 2 according to the method described in Embodiment 1, in which the showing a first visual element includes:
showing a target animation of the first visual element, in which the target animation comprises at least one of a first animation and a second animation.

According to one or more embodiments of the present disclosure, Embodiment 3 according to the method described in Embodiment 2, in which the showing a target animation of the first visual element includes at least one selected from the group of following:
in response to a duration from the first triggering operation received currently to the first triggering operation received last time being greater than a first preset duration, showing a first animation of the first visual element, and after the completion of showing the first animation, continuing to show the second animation of the first visual element; and
in response to the duration from the first triggering operation received currently to the first triggering operation received last time being less than or equal to the first preset duration, showing a second animation of the first visual element.

According to one or more embodiments of the present disclosure, Embodiment 4 according to the method described in Embodiment 2, in which the showing a target animation of the first visual element includes at least one selected from the group of following:
in response to a target quantity not meeting a preset condition, showing a first animation of the first visual element; and
in response to the target quantity meeting the preset condition, showing the second animation of the first visual element;
in which the target quantity is a current target sending quantity of the target preset object, or a total quantity of the target preset object sent continuously; and the preset condition includes at least one selected from the group of following: the target quantity changing from being less than a first preset quantity to being greater than or equal to the first preset quantity, the target quantity being greater than or equal to a second preset quantity, or, the target quantity being equal to a third preset quantity.

According to one or more embodiments of the present disclosure, Embodiment 5 according to the method described in Embodiment 2, in which the first animation is configured to present a picture in which the first visual element moves from a second preset position of the object panel toward a second display position of the first identifier.

According to one or more embodiments of the present disclosure, Embodiment 6 according to the method described in any one of Embodiments 1-5, further including:
sending the target preset object to the target publisher in response to the first triggering operation for the object control.

According to one or more embodiments of the present disclosure, Embodiment 7 according to the method described in Embodiment 6, in which at least two object controls are displayed in the object panel, and the target preset object corresponding to the target object control includes:
the target preset object being a preset object corresponding to the target object control; and/or
a target sending quantity of the target preset object being a sending quantity corresponding to the target object control.

According to one or more embodiments of the present disclosure, Embodiment 8 according to the method described in Embodiment 6, in which one object control and a target sending quantity of the target preset object are displayed in the object panel, and after the displaying an object panel of a target work in a first page, the method further includes:
switching the target sending quantity displayed in the object panel in response to a second triggering operation.

According to one or more embodiments of the present disclosure, Embodiment 9 according to the method described in Embodiment 6, further including:
counting the target preset object sent by a current user to the target publisher, and displaying a total quantity obtained by counting until no first triggering operation acting on the target object control is received again within the first preset duration.

According to one or more embodiments of the present disclosure, Embodiment 10 according to the method described in Embodiment 6, after the displaying an object panel of a target work in a first page, further including:
displaying a first user list corresponding to the target work in response to a list displaying operation acting within the object panel, in which the first user list is configured to show user information of at least part of the first user, and the first user is a user who sends a preset object to the target publisher through the target work.

According to one or more embodiments of the present disclosure, Embodiment 11 according to the method described in Embodiment 6, in which a quantity of the second visual element is associated with the target object control and/or a target sending quantity corresponding to the target object control.

According to one or more embodiments of the present disclosure, Embodiment 12 according to the method described in any of Embodiments 1-5, in which the displaying a second visual element at a first preset position of the first page includes:
in response to no first triggering operation being received again within the first preset duration after receiving the first triggering operation, displaying the second visual element at the first preset position of the first page.

According to one or more embodiments of the present disclosure, Embodiment 13 according to the method described in any of Embodiments 1-5, in which the controlling the second visual element to move in the first page includes:
controlling the second visual element to move from the first preset position to the first display position of the first identifier; or
controlling the second visual element to move from the first preset position to a preset boundary of the object panel until the second visual element comes into contact with the preset boundary or a second visual element which stops moving; and in response to a duration that the second visual element stops moving reaching a second preset duration, controlling the second visual element to move to the first display position of the first identifier.

According to one or more embodiments of the present disclosure, Embodiment 14 according to the method described in any of Embodiments 1-5, in which a second identifier of the target publisher is further displayed in the object panel, and after the cancelling a display of the second visual element, the method further includes:
switching the first identifier to a third visual element for displaying, and switching the second identifier to preset feedback information of the target publisher for displaying, the third visual element is configured to provide a feedback to the current user.

According to one or more embodiments of the present disclosure, Embodiment 15 according to the method described in Embodiment 14, in which the switching the first identifier to a third visual element for displaying includes:
controlling the first identifier to rotate along a preset direction, and switching the first identifier to the third visual element for displaying in a rotation process.

According to one or more embodiments of the present disclosure, Embodiment 16 according to the method described in any of Embodiments 1-5, further including:
in response to a page display operation for a second page, displaying the second page, and displaying a second user list corresponding to the current user in the second page, in which first user information is shown in the second user list, and the first user information is user information of a second user who sends a preset object to the current user through a work published by the current user within a first time period; and
in response to a time period switching operation, switching the first user information displayed in the second user list to second user information, in which the second user information is user information of a second user who sends the preset object to the current user through the work published by the current user within a second time period.

According to one or more embodiments of the present disclosure, Embodiment 17 according to the method described in Embodiment 16, in which a preset progress identifier is further displayed in the second page, and a current progress of the preset progress identifier is associated with the preset object received by the current user.

According to one or more embodiments of the present disclosure, Embodiment 18 provides an interaction apparatus, including:
an object panel display module, configured to display an object panel of a target work in a first page, in which a first identifier of a target publisher and at least one object control are displayed in the object panel, and the target publisher is a publisher of the target work;
an element showing module, configured to show a first visual element in response to a first triggering operation for the object control, in which the first visual element is associated with a target preset object, the target preset object corresponds to a target object control, and the target object control is an object control on which the first triggering operation acts;
a moving control module, configured to, after the completion of showing the first visual element, display a second visual element at a first preset position of the first page, and control the second visual element to move in the first page; and
a cancelling display module, configured to cancel a display of the second visual element in response to the second visual element moving to a first display position of the first identifier.

According to one or more embodiments of the present disclosure, Embodiment 19 provides an electronic device, including:
at least one processor; and
a memory in communication connection with the at least one processor; in which, the memory stores a computer program executable by the at least one processor, and the computer program is executed by the at least one processor to enable the at least one processor to perform the interaction method according to any of Embodiments 1-17.

According to one or more embodiments of the present disclosure, Embodiment 20 provides a computer-readable storage medium, storing computer instructions which, when executed by a processor, implement the interaction method according to any of Embodiments 1-17.

The foregoing are merely descriptions of the preferred embodiments of the present disclosure and the explanations of the technical principles involved. It will be appreciated by those skilled in the art that the scope of the disclosure involved herein is not limited to the technical solutions formed by a specific combination of the technical features described above, and shall cover other technical solutio ns formed by any combination of the technical features described above or equivalent features thereof without departing from the concept of the present disclosure. For example, the technical features descr ibed above may be mutually replaced with the technical features having similar functions disclosed he rein (but not limited thereto) to form new technical solutions.

In addition, while operations have been described in a particular order, it shall not be construe d as requiring that such operations are performed in the stated specific order or sequence. Under certai n circumstances, multitasking and parallel processing may be advantageous. Similarly, while some spe cific implementation details are included in the above discussions, these shall not be construed as limit ations to the present disclosure. Some features described in the context of a separate embodiment may also be combined in a single embodiment. Rather, various features described in the context of a single embodiment may also be implemented separately or in any appropriate subcombination in a plurality of embodiments.

Although the present subject matter has been described in a language specific to structural fea tures and/or logical method acts, it will be appreciated that the subject matter defined in the appended claims is not necessarily limited to the particular features and acts described above. Rather, the particu lar features and acts described above are merely exemplary forms for implementing the claims. Specifi c manners of operations performed by the modules in the apparatus in the above embodiment have bee n described in detail in the embodiments regarding the method, which will not be explained and descri bed in detail herein again.

## Claims

1. An interaction method, comprising:
displaying an object panel of a target work in a first page, wherein a first identifier of a target publisher and at least one object control are displayed in the object panel, and the target publisher is a publisher of the target work;
showing a first visual element in response to a first triggering operation for the object control, wherein the first visual element is associated with a target preset object, the target preset object corresponds to a target object control, and the target object control is an object control on which the first triggering operation acts;
displaying a second visual element at a first preset position of the first page and controlling the second visual element to move in the first page after completion of showing the first visual element; and
cancelling a display of the second visual element in response to the second visual element moving to a first display position of the first identifier.

2. The method according to claim 1, wherein the showing a first visual element comprises:
showing a target animation of the first visual element, wherein the target animation comprises at least one of a first animation and a second animation.

3. The method according to claim 2, wherein the showing a target animation of the first visual element comprises at least one selected from a group comprising following:
in response to a duration from the first triggering operation received currently to the first triggering operation received last time being greater than a first preset duration, showing the first animation of the first visual element, and after completion of showing the first animation, continuing to show the second animation of the first visual element; and
in response to the duration from the first triggering operation received currently to the first triggering operation received last time being less than or equal to the first preset duration, showing the second animation of the first visual element.

4. The method according to claim 2, wherein the showing a target animation of the first visual element comprises at least one selected from a group comprising following:
in response to a target quantity not meeting a preset condition, showing the first animation of the first visual element; and
in response to the target quantity meeting the preset condition, showing the second animation of the first visual element;
wherein the target quantity is a target sending quantity of the target preset object for this time, or a total quantity of the target preset object sent continuously; and the preset condition comprises at least one selected from a group comprising following: the target quantity changing from being less than a first preset quantity to being greater than or equal to the first preset quantity, the target quantity being greater than or equal to a second preset quantity, or, the target quantity being equal to a third preset quantity.

5. The method according to any one of claims 2-4, wherein the first animation is configured to present a picture in which the first visual element moves from a second preset position of the object panel toward a second display position of the first identifier.

6. The method according to any one of claims 1-5, further comprising:
sending the target preset object to the target publisher in response to the first triggering operation for the object control.

7. The method according to claim 6, wherein at least two object controls are displayed in the object panel, and the target preset object corresponding to the target object control comprises:
the target preset object being a preset object corresponding to the target object control; and/or
a target sending quantity of the target preset object being a sending quantity corresponding to the target object control.

8. The method according to claim 6, wherein one object control and a target sending quantity of the target preset object are displayed in the object panel, and after the displaying an object panel of a target work in a first page, the method further comprises:
switching the target sending quantity displayed in the object panel in response to a second triggering operation.

9. The method according to claim 6, further comprising:
counting the target preset object sent by a current user to the target publisher, and displaying a total quantity obtained by counting until no first triggering operation acting on the target object control is received again within a first preset duration.

10. The method according to claim 6, wherein after the displaying an object panel of a target work in a first page, the method further comprises:
displaying a first user list corresponding to the target work in response to a list display operation acting within the object panel, wherein the first user list is used to show user information of at least part of first users, and each first user is a user who sends a preset object to the target publisher through the target work.

11. The method according to any one of claims 6-10, wherein a quantity of the second visual element is associated with the target object control and/or a target sending quantity corresponding to the target object control.

12. The method according to any one of claims 1-11, wherein the displaying a second visual element at a first preset position of the first page comprises:
in response to no first triggering operation being received again within the first preset duration after receiving the first triggering operation, displaying the second visual element at the first preset position of the first page.

13. The method according to any one of claims 1-12, wherein the controlling the second visual element to move in the first page comprises:
controlling the second visual element to move from the first preset position to the first display position of the first identifier; or
controlling the second visual element to move from the first preset position to a preset boundary of the object panel until the second visual element comes into contact with the preset boundary or a second visual element which stops moving; and in response to a duration that the second visual element stops moving reaching a second preset duration, controlling the second visual element to move to the first display position of the first identifier.

14. The method according to any one of claims 1-13, wherein a second identifier of the target publisher is further displayed in the object panel, and after the cancelling a display of the second visual element, the method further comprises:
switching the first identifier to a third visual element for displaying, and switching the second identifier to preset feedback information of the target publisher for displaying, wherein the third visual element is configured to provide a feedback to a current user.

15. The method according to claim 14, wherein the switching the first identifier to a third visual element for displaying comprises:
controlling the first identifier to rotate along a preset direction, and switching the first identifier to the third visual element for displaying in a rotation process.

16. The method according to any one of claims 1-15, further comprising:
in response to a page display operation for a second page, displaying the second page, and displaying a second user list corresponding to a current user in the second page, wherein first user information is shown in the second user list, and the first user information is user information of a second user who sends a preset object to the current user through a work published by the current user within a first time period; and
in response to a time period switching operation, switching the first user information displayed in the second user list to second user information, wherein the second user information is user information of a second user who sends the preset object to the current user through the work published by the current user within a second time period.

17. The method according to claim 16, wherein a preset progress identifier is further displayed in the second page, and a current progress of the preset progress identifier is associated with the preset object received by the current user.

18. An interaction apparatus, comprising:
an object panel display module, configured to display an object panel of a target work in a first page, wherein a first identifier of a target publisher and at least one object control are displayed in the object panel, and the target publisher is a publisher of the target work;
an element showing module, configured to show a first visual element in response to a first triggering operation for the object control, wherein the first visual element is associated with a target preset object, the target preset object corresponds to a target object control, and the target object control is an object control on which the first triggering operation acts;
a moving control module, configured to, after completion of showing the first visual element, display a second visual element at a first preset position of the first page and control the second visual element to move in the first page; and
a cancelling display module, configured to cancel a display of the second visual element in response to the second visual element moving to a first display position of the first identifier.

19. An electronic device, comprising:
at least one processor; and
a memory in communication connection with the at least one processor;
wherein the memory stores a computer program executable by the at least one processor, and the computer program is executed by the at least one processor to enable the at least one processor to implement the interaction method according to any one of claims 1-17.

20. A computer-readable storage medium, wherein the computer-readable storage medium stores computer instructions, the computer instructions, when executed by a processor, implement the interaction method according to any one of claims 1-17.
